# EUROPÄISCHE PATENTSCHRIFT

(11) **EP 1 089 946 B1**
(45) Veröffentlichungstag und Bekanntmachung des Hinweises auf die Patenterteilung: **19.02.2003**
(21) Anmeldenummer: 99927759.3
(22) Anmeldetag: 26.05.1999
(51) Int. Cl.: C03C 17/34, G02B 1/11

(54) **VERFAHREN ZUR HERSTELLUNG OPTISCHER MEHRSCHICHTSYSTEME**
METHOD FOR PRODUCING MULTILAYERED OPTICAL SYSTEMS
PROCEDE POUR PRODUIRE DES SYSTEMES OPTIQUES MULTICOUCHES

(30) Priorität: 27.05.1998 DE 19823732
(43) Veröffentlichungstag der Anmeldung: 11.04.2001
(73) Patentinhaber: INSTITUT FÜR NEUE MATERIALIEN GEM. GMBH, 66123 Saarbrücken (DE)
(72) Erfinder: MENNIG, Martin, D-66287 Quierschied (DE); OLIVEIRA, Peter, W., D-66111 Saarbrücken (DE); SCHMIDT, Helmut, D-66130 Saarbrücken-Güdingen (DE)
(74) Vertreter: Barz, Peter
(86) Internationale Anmeldenummer: EP9903621
(87) Internationale Veröffentlichungsnummer: WO99061383

(56) Entgegenhaltungen:
- WO-A-98/51747
- DE-A- 19 613 645
- OLIVEIRA P W ET AL: "Generation of wet-chemical AR-coatings on plastic substrates by the use of polymerizable nanoparticles" SOL-GEL OPTICS IV, SAN DIEGO, CA, USA, 30 JULY-1 AUG. 1997, Bd. 3136, Seiten 452-461, XP002116196 Proceedings of the SPIE - The International Society for Optical Engineering, 1997, SPIE-Int. Soc. Opt. Eng, USA ISSN: 0277-786X

## Beschreibung

Die Erfindung betrifft ein Verfahren zur Herstellung optischer Mehrschichtsysteme durch ein einstufiges Einbrennverfahren ("Stackeinbrand").

Mehrschichtsysteme mit optischer Wirkung können auf Glas über den sogenannten Sol-Gel-Prozeß hergestellt werden; siehe z.B. Dislich et al. DE 1941191. Prinzip dieser Herstellungsmethode ist, daß das entsprechende Glassubstrat durch einen Tauchprozeß mit einem Sol beschichtet, bei höheren Temperaturen getrocknet und eingebrannt wird, um eine Verdichtung zu erreichen. Nach dem Vortrocknen bei Temperaturen > 100 °C ist es auch möglich, eine weitere Schicht durch Tauchen aufzubringen und beide Schichten auf einmal einzubrennen. Die Vortrocknung bei höheren Temperaturen ist notwendig, um der ersten Schicht eine ausreichende chemische Stabilität zu verleihen, da sie sonst durch das neue Beschichtungssol entweder an- oder aufgelöst wird. Die Schichtdicke, die man mit mehreren Schichten erzielen kann, ohne jede einzelne Schicht vorher dichtzusintern, liegt bei ca. 0,5 µm, da ansonsten Rißbildung auftritt. Die Rißbildung tritt infolge der schon starken dreidimensionalen Vernetzung der porösen Schichtsysteme auf, da die Schrumpfung, die beim Erhitzen auftritt, nicht mehr durch Spannungsrelaxation abgebaut werden kann. Darüber hinaus ist das Verfahren auch aufwendig, da nach jedem Schichtauftrag eine Temperaturbehandlung erforderlich ist und bei mehreren Schichten ein Einbrennen bei Temperaturen von 400 - 500 °C notwendig wird. Damit wird die Herstellung von Mehrschichtsystemen, wie sie bei speziellen optischen Anwendungen (Breitband-Antireflexvergütung, Kaitlichtspiegel, etc.) erforderlich ist, außerordentlich arbeits- und kostenaufwendig.

Zwar wurde in der WO 93/24424 gezeigt, daß durch den Einbau von Relaxationsmechanismen auch dicke Schichten hergestellt werden können. Diese sind jedoch für die Erzielung optischer Wirkung nicht brauchbar, da sie der Bedingung von λ/4-Schichten nicht genügen.

P.W. Oliveira, H. Krug, A. Frantzen, M. Mennig, H. Schmidt beschreiben in SPIE, Bd. 3136, Seiten 452-461, ein Verfahren zur Herstellung optischer Mehrschichtsysteme auf Kunststoffsubstraten unter Verwendung von mit 3-Glycidoxypropyltrimethoxysilan oberflächenmodifizierten nanoskaligen Teilchen in einer organisch modifizierten anorganischen Matrix. Es erfolgt eine photolytische Härtung. Eine thermische Behandlung der Beschichtung findet bei maximal 80°C statt.

DE-A-196 13 645 betrifft ein Verfahren zur Herstellung optischer Formkörper oder optischer Beschichtungen auf einem Glassubstrat, die einen Konzentrationsgradienten von nanoskaligen Teilchen in einer Matrix aufweisen.

WO-98/51747 ist ein nachveröffentliches Dokument gemäß Art. 54(3) EPÜ und beschreibt ein Verfahren zur Herstellung optischer Formkörper oder optischer Beschichtungen auf einem Glassubstrat. Die Beschichtungszusammensetzung umfaßt nanoskalige anorganische Teilchen, die polymerisierbare Oberflächengruppen enthalten. Die Beschichtung kann bei Temperaturen über 400°C verdichtet werden. Es werden Einschicht-Beschichtungen beschrieben. Der Einsatz als Interferenzschichten wird erwähnt.

Aufgabe der Erfindung war es, optische Mehrschichtsysteme möglichst ohne aufwendige Temperaturzwischenschritte so herzustellen, daß die später gewünschte optische Wirkung auftritt.

Diese Aufgabe wird erfindungsgemäß gelöst mit einem Verfahren zur Herstellung optischer Mehrschichtsysteme umfassend die folgenden Stufen:
a) Aufbringen einer nanoskalige anorganische Feststoffteilchen mit polymerisierbaren und/oder polykondensierbaren organischen Oberflächengruppen enthaltenden fließfähigen Zusammensetzung auf ein Glassubstrat;
b) Polymerisation und/oder Polykondensation der Oberflächengruppen der Feststoffteilchen unter Bildung einer organisch vernetzten Schicht;
c) Aufbringen einer weiteren Zusammensetzung gemäß a), die eine andere Brechzahl als die vorangehende Zusammensetzung ergibt, auf die organisch vernetzte Schicht;
d) Polymerisation und/oder Polykondensation der Oberflächengruppen der Feststoffteilchen unter Bildung einer weiteren organisch vernetzten Schicht;
e) gegebenenfalls ein- oder mehrmaliges Wiederholen der Schritte c) und d) unter Bildung weiterer organisch vernetzter Schichten auf den bereits vorhandenen organisch vernetzten Schichten und/oder anderen Flächen des Substrats; und
f) einstufiges thermisches Verdichten des Schichtverbunds und Ausbrennen der enthaltenen organischen Bestandteile.

Durch Verwendung nanoskaliger Partikel, die mit polymerisierbaren und/oder polykondensierbaren Gruppen beschichtet sind, besteht die Möglichkeit, chemisch stabile Schichten schon bei sehr niedrigen Temperaturen z.B. über Photopolymerisation herzustellen und auf diese Weise weitere Schichten nach demselben Verfahren aufzutragen. Dabei wurde völlig überraschend gefunden, daß diese Schichten sich ohne Rißbildung auch bei Schichtsystemen mit bis zu 10 oder mehr Einzelschichten verdichten lassen und daß ihre optische Wirkung exakt vorausberechnet werden kann. Diese ergibt sich aus dem Gehalt an anorganischen Komponenten des jeweiligen Beschichtungssystems, der Auftragmenge (Schichtdicke) und dem nach der thermischen Endverdichtung erreichten Brechwert.

In der vorliegenden Beschreibung und den anhängenden Ansprüchen werden unter "nanoskaligen anorganischen Feststoffteilchen" solche mit einer mittleren Teilchengröße (einem mittleren Teilchendurchmesser) von nicht mehr als 200 nm, vorzugsweise nicht mehr als 100 nm, und insbesondere nicht mehr als 70 nm verstanden. Ein besonders bevorzugter Teilchengrößenbereich liegt bei 5 bis 50 nm.

Die nanoskaligen anorganischen Feststoffteilchen können aus beliebigen Materialien bestehen, vorzugsweise bestehen sie jedoch aus Metallen und insbesondere aus Metallverbindungen wie beispielsweise (gegebenenfalls hydratisierten) Oxiden wie ZnO, CdO, SiO₂, TiO₂, ZrO₂, CeO₂, SnO₂, Al₂O₃, In₂O₃, La₂O₃, Fe₂O₃, Cu₂O, Ta₂O₅, Nb₂O₅, V₂O₅, MoO₃ oder WO₃; Chalkogeniden wie beispielsweise Sulfiden (z.B. CdS, ZnS, PbS und Ag₂S), Seleniden (z.B. GaSe, CdSe und ZnSe) und Telluriden (z.B. ZnTe oder CdTe), Halogeniden wie AgCl, AgBr, Agl, CuCI, CuBr, Cdl₂ und Pbl₂; Carbiden wie CdC₂ oder SiC; Arseniden wie AlAs, GaAs und GeAs; Antimoniden wie InSb; Nitriden wie BN, AIN, Si₃N₄ und Ti₃N₄; Phosphiden wie GaP, InP, Zn₃P₂ und Cd₃P₂; Phosphaten, Silikaten, Zirkonaten, Aluminaten, Stannaten und den entsprechenden Mischoxiden (z.B. solchen mit Perowskitstruktur wie BaTiO₃ und PbTiO₃).

Bevorzugt handelt es sich bei den im erfindungsgemäßen Verfahren eingesetzten nanoskaligen anorganischen Feststoffteilchen um solche von Oxiden, Sulfiden, Seleniden und Telluriden von Metallen und Mischungen derselben. Erfindungsgemäß besonders bevorzugt werden nanoskalige Teilchen von SiO₂, TiO₂, ZrO₂, ZnO, Ta₂O₅, SnO₂ und Al₂O₃ (in allen Modifikationen, insbesondere als Böhmit, AIO(OH)) sowie Mischungen derselben.

Da die erfindungsgemäß einsetzbaren nanoskaligen Teilchen einen breiten Bereich von Brechzahlen abdecken, kann durch geeignete Auswahl dieser nanoskaligen Teilchen die Brechzahl der Schicht(en) in bequemer Weise auf den gewünschten Wert eingestellt werden.

Die Herstellung der erfindungsgemäß eingesetzten nanoskaligen Feststoffteilchen kann auf übliche Weise erfolgen, z.B. durch Flammpyrolyse, Plasmaverfahren, Gasphasenkondensationsverfahren, Kolloidtechniken, Präzipitationsverfahren, Sol-Gel-Prozesse, kontrollierte Nukleations- und Wachstumsprozesse, MOCVD-Verfahren und (Mikro)emulsionsverfahren. Diese Verfahren sind in der Literatur ausführlich beschrieben. Insbesondere können z.B. Metalle (beispielsweise nach der Reduktion der Fällungsverfahren), keramische oxidische Systeme (durch Präzipitation aus Lösung), aber auch salzartige oder Mehrkomponentensysteme herangezogen werden. Zu den salzartigen oder Mehrkomponentensystemen zählen auch Halbleitersysteme.

Die Herstellung der mit polymerisierbaren und/oder polykondensierbaren organischen Oberflächengruppen versehenen nanoskaligen anorganischen Feststoffteilchen, die erfindungsgemäß eingesetzt werden, kann prinzipiell auf zwei verschiedenen Wegen durchgeführt werden, nämlich zum einen durch Oberflächenmodifizierung von bereits hergestellten nanoskaligen anorganischen Feststoffteilchen und zum anderen durch Herstellung dieser anorganischen nanoskaligen Feststoffteilchen unter Verwendung von einer oder mehreren Verbindungen, die über derartige polymerisierbare und/oder polykondensierbare Gruppierungen verfügen. Diese beiden Wege werden weiter unten und in den Beispielen näher erläutert.

Bei den organischen polymerisierbaren und/oder polykondensierbaren Oberflächengruppen kann es sich um beliebige, dem Fachmann bekannte Gruppen handeln, die einer radikalischen, kationischen oder anionischen, thermischen oder photochemischen Polymerisation oder einer thermischen oder photochemischen Polykondensation (gegebenenfalls in Anwesenheit eines geeigneten Initiators bzw. Katalysators) zugänglich sind. Erfindungsgemäß bevorzugt werden Oberflächengruppen, die über eine (Meth)acryl-, Allyl-, Vinyl- oder Epoxygruppe verfügen, wobei (Meth)acryl- und Epoxygruppen besonders bevorzugt werden. Bei den polykondensationsfähigen Gruppen wären vor allem Hydroxy-, Carboxy- und Aminogruppen zu nennen, mit deren Hilfe Ether-, Ester- und Amidbindungen zwischen den nanoskaligen Teilchen erhalten werden können.

Erfindungsgemäß bevorzugt ist es auch, daß die an den Oberflächen der nanoskaligen Teilchen vorhandenen organischen Gruppierungen, die die polymerisierbaren und/oder polykondensierbaren Gruppen umfassen, ein relativ niedriges Molekulargewicht aufweisen. Insbesondere sollte das Molekulargewicht der (rein organischen) Gruppierungen 500 und vorzugsweise 300, besonders bevorzugt 200, nicht übersteigen. Dies schließt selbstverständlich ein deutlich höheres Molekulargewicht der diese Gruppierungen umfassenden Verbindungen (Moleküle) nicht aus (z.B. 1000 und mehr).

Wie bereits oben erwähnt, können die polymerisierbaren/polykondensierbaren Oberflächengruppen prinzipiell auf zwei Wegen bereitgestellt werden. Wird eine Oberflächenmodifizierung bereits hergestellter nanoskaliger Teilchen durchgeführt, eignen sich zu diesem Zweck alle (vorzugsweise niedermolekularen) Verbindungen, die zum einen über eine oder mehrere Gruppen verfügen, die mit auf der Oberfläche der nanoskaligen Feststoffteilchen vorhandenen funktionellen Gruppen (wie beispielsweise OH-Gruppen im Falle von Oxiden) reagieren oder zumindest wechselwirken können, und zum anderen mindestens eine polymerisierbare/polykondensierbare Gruppe aufweisen. Somit können die entsprechenden Verbindungen z.B. sowohl kovalente als auch ionische (salzartige) oder koordinative (Komplex)-Bindungen zur Oberfläche der nanoskaligen Feststoffteilchen ausbilden, während unter den reinen Wechselwirkungen beispielhaft Dipol-Dipol-Wechselwirkungen, Wasserstoffbrückenbindungen und van der Waals-Wechselwirkungen zu nennen wären. Bevorzugt wird die Ausbildung von kovalenten und/oder koordinativen Bindungen. Konkrete Beispiele für zur Oberflächenmodifizierung der nanoskaligen anorganischen Feststoffteilchen heranziehbare organische Verbindungen sind beispielsweise ungesättigte Carbonsäuren wie Acrylsäure und Methacrylsäure, β-Dicarbonyl-Verbindungen (z.B. β-Diketone oder β-Carbonylcarbonsäuren) mit polymerisierbaren Doppelbindungen, ethylenisch ungesättigte Alkohole und Amine, Aminosäuren, Epoxide und dergleichen. Erfindungsgemäß besonders bevorzugt als derartige Verbindungen werden - insbesondere im Fall von oxidischen Teilchen - hydrolytisch kondensierbare Silane mit mindestens (und vorzugsweise) einem nicht hydrolysierbaren Rest, der über eine polymerisierbare Kohlenstoff-Kohlenstoff-Doppelbindung oder einen Epoxidring verfügt. Vorzugsweise weisen derartige Silane die allgemeine Formel (I) auf:

X-R¹-SiR² ₃ (I)

worin X für CH₂=CR³-COO, CH₂=CH oder Glycidyloxy steht, R³ Wasserstoff oder Methyl darstellt, R¹ ein zweiwertiger Kohlenwasserstoffrest mit 1 bis 10, vorzugsweise 1 bis 6 Kohlenstoffatomen ist, der gegebenenfalls eine oder mehrere Heteroatomgruppierungen (z.B. O, S, NH) enthält, die benachbarte Kohlenstoffatome voneinander trennen, und die Reste R², gleich oder verschieden voneinander, aus Alkoxy-, Aryloxy-, Acyloxy- und Alkylcarbonylgruppen sowie Halogenatomen (insbesondere F, Cl und/oder Br) ausgewählt sind.

Vorzugsweise sind die Gruppen R² identisch und ausgewählt aus Halogenatomen, C₁₋₄-Alkoxygruppen (z.B. Methoxy, Ethoxy, n-Propoxy, i-Propoxy und Butoxy), C₆₋₁₀-Aryloxygruppen (z.B. Phenoxy), C₁₋₄-Acyloxygruppen (z.B. Acetoxy und Propionyloxy) und C₂₋₁₀-Alkylcarbonylgruppen (z.B. Acetyl).

Besonders bevorzugte Reste R² sind C₁₋₄-Alkoxygruppen und insbesondere Methoxy und Ethoxy.

Beim Rest R¹ handelt es sich vorzugsweise um eine Alkylengruppe, insbesondere um eine solche mit 1 bis 6 Kohlenstoffatomen, wie z.B. Ethylen, Propylen, Butylen und Hexylen. Wenn X für CH₂=CH steht, bedeutet R¹ vorzugsweise Methylen und kann in diesem Fall auch eine bloße Bindung bedeuten.

Vorzugsweise stellt X CH₂=CR³-COO (wobei R³ vorzugsweise CH₃ ist) oder Glycidyloxy dar. Dementsprechend sind besonders bevorzugte Silane der allgemeinen Formel (I) (Meth)acryloyloxyalkyltrialkoxysilane wie z.B. 3-Methacryloyloxypropyltri(m)ethoxysilan und Glycidyloxyalkyltrialkoxysilane wie beispielsweise 3-Glycidyloxypropyltri(m)ethoxysilan.

Erfolgt bereits die Herstellung der nanoskaligen anorganischen Feststoffteilchen unter Verwendung einer oder mehrerer Verbindungen, die über polymerisierbare/polykondensierbare Gruppen verfügen, kann von einer nachträglichen Oberflächenmodifizierung abgesehen werden (obwohl diese selbstverständlich als zusätzliche Maßnahme möglich ist).

Die in situ-Herstellung von nanoskaligen anorganischen Feststoffteilchen mit polymerisierbaren/polykondensierbaren Oberflächengruppen sei im folgenden am Beispiel von SiO₂-Teilchen erläutert. Zu diesem Zweck können die SiO₂-Teilchen z.B. nach dem Sol-Gel-Prozeß unter Verwendung mindestens eines hydrolytisch polykondensierbaren Silans mit mindestens einer polymerisierbaren/polykondensierbaren Gruppe hergestellt werden. Als derartige Silane eignen sich beispielsweise die oben bereits beschriebenen Silane der allgemeinen Formel (1). Diese Silane werden vorzugsweise entweder allein oder in Kombination mit einem geeigneten Silan der allgemeinen Formel (II)

SiR² ₄ (II)

worin R² die oben angegebene Bedeutung aufweist, eingesetzt. Bevorzugte Silane der obigen allgemeinen Formel (II) sind Tetramethoxysilan und Tetraethoxysilan.

Selbstverständlich ist es auch möglich, zusätzlich oder alternativ zu den Silanen der allgemeinen Formel (II) andere Silane einzusetzen, z.B. solche, die über eine (nichthydrolysierbare) Kohlenwasserstoffgruppe ohne jegliche funktionelle Gruppe verfügen, wie beispielsweise Methyl- oder Phenyltrialkoxysilane.

Die im erfindungsgemäßen Verfahren eingesetzte Zusammensetzung liegt in Form einer noch fließfähigen Masse (Suspension) vor. Der flüssige Bestandteil dieser Masse setzt sich zum Beispiel aus Wasser und/oder (vorzugsweise mit Wasser mischbarem) organischen Lösungsmittel und/oder Verbindungen, die im Zuge der Herstellung der nanoskaligen Teilchen oder deren Oberflächenmodifizierung eingesetzt oder erzeugt wurden (z.B. Alkoholen im Falle von Alkoxysilanen), zusammen. Gegebenenfalls zusätzlich eingesetzte geeignete organische Lösungsmittel sind zum Beispiel Alkohole, Ether, Ketone, Ester, Amide und dergleichen. Ein (zusätzlicher) Bestandteil der fließfähigen Masse kann beispielsweise aber auch mindestens eine monomere oder oligomere Spezies sein, die über mindestens eine Gruppe verfügt, die mit den an der Oberfläche der nanoskaligen Teilchen vorhandenen polymerisierbaren/polykondensierbaren Gruppen reagieren (polymerisieren bzw. polykondensieren) kann. Als derartige Spezies seien z.B. Monomere mit einer polymerisierbaren Doppelbindung wie beispielsweise Acrylsäureester, Methacrylsäureester, Styrol, Vinylacetat und Vinylchlorid genannt. Bevorzugte monomere Verbindungen mit mehr als einer polymerisierbaren Bindung sind insbesondere solche der allgemeinen Formel (III):

(CH₂=CR³-COZ-)ₙ-A (III)

worin
n = 2, 3 oder 4, vorzugsweise 2 oder 3 und insbesondere 2;
Z = O oder NH, vorzugsweise O;
R³= H, CH₃;
A = n-wertiger Kohlenwasserstoffrest mit 2 bis 30, insbesondere 2 bis 20 Kohlenstoffatomen, der eine oder mehrere Heteroatomgruppierungen aufweisen kann, die sich jeweils zwischen zwei benachbarten Kohlenstoffatomen befinden (Beispiele für derartige Heteroatomgruppierungen sind O, S, NH, NR (R = Kohlenwasserstoffrest), vorzugsweise O).

Weiter kann der Kohlenwasserstoffrest A einen oder mehrere Substituenten tragen, die vorzugsweise ausgewählt sind aus Halogen (insbesondere F, Cl und/oder Br), Alkoxy (insbesondere C₁₋₄-Alkoxy), Hydroxy, gegebenenfalls substituiertem Amino, NO₂, OCOR⁵, COR⁵ (R⁵ = C₁₋₆-Alkyl oder Phenyl). Vorzugsweise ist der Rest A jedoch unsubstituiert oder mit Halogen und/oder Hydroxy substituiert.

In einer Ausführungsform der vorliegenden Erfindung ist A von einem aliphatischen Diol, einem Alkylenglycol, einem Polyalkylenglycol oder einem gegebenenfalls alkoxylierten (z.B. ethoxylierten) Bisphenol (z.B. Bisphenol A) abgeleitet.

Weitere einsetzbare Verbindungen mit mehr als einer Doppelbindung sind zum Beispiel Allyl(meth)acrylat, Divinylbenzol und Diallylphthalat. Ebenso kann zum Beispiel eine Verbindung mit 2 oder mehr Epoxygruppen verwendet werden (im Fall der Verwendung von Epoxid-haltigen Oberflächengruppen), z.B. Bisphenol A-diglycidylether oder auch ein (oligomeres) Vorkondensat eines Epoxidgruppenhaltigen hydrolysierbaren Silans (z.B. Glycidoxypropyltrimethoxysilan).

Der Anteil an organischen Komponenten in den erfindungsgemäß verwendeten Beschichtungszusammensetzungen beträgt vorzugsweise nicht mehr als 20 Gewichtsprozent, bezogen auf den Feststoffgehalt. Für Schichten mit hoher Brechzahl kann er z.B. 5 Gewichtsprozent, für Schichten mit niedriger Brechzahl z.B. 15 Gewichtsprozent betragen.

Die erfindungsgemäß verwendete Beschichtungszusammensetzung hat vorzugsweise einen pH-Wert ≥ 3, besonders bevorzugt ≥ 4. Im allgemeinen liegt der pH im Neutralbereich bis etwa 8, vorzugsweise bis etwa 7,5.

In Stufe a) des erfindungsgemäßen Verfahrens wird die Beschichtungszusammensetzung auf ein Glassubstrat aufgebracht, um dieses ganz oder teilweise zu beschichten. Die für diesen Zweck geeigneten Beschichtungsverfahren sind die herkömmlichen und dem Fachmann bekannten. Beispiele hierfür sind Tauchen, Sprühen, Rakeln, Streichen, Bürsten oder Schleudern.

Vor dem Aufbringen auf das Substrat kann die fließfähige Masse zum Beispiel durch Zugabe von Lösungsmittel oder Verdampfung von flüchtigen Bestandteilen (insbesondere bereits vorhandenem Lösungsmittel) auf eine geeignete Viskosität eingestellt werden.

Das Substrat kann vor dem Aufbringen der fließfähigen Masse gegebenenfalls einer Vorbehandlung (z.B. Reinigung, Entfettung etc.) unterzogen werden.

In Stufe b) der erfindungsgemäßen Verfahrens wird eine Polymerisation und/oder Polykondensation der polymerisierbaren/polykondensierbaren Oberflächengruppen der nanoskaligen anorganischen Feststoffteilchen (und gegebenenfalls der polymerisierbaren/polykondensierbaren Gruppen der zusätzlich eingesetzten monomeren oder oligomeren Spezies) durchgeführt. Diese Polymerisation/Polykondensation kann auf die dem Fachmann geläufige Art und Weise durchgeführt werden. Beispiele für geeignete Verfahren sind thermisch, photochemisch (z.B. mit UV-Strahlung), Elektronenstrahl-Härtung, Laserhärtung, Raumtemperaturhärtung usw. Gegebenenfalls erfolgt eine derartige Polymerisation/Polykondensation in Anwesenheit eines geeigneten Katalysators bzw. Starters (Initiators), der der fließfähigen Masse spätestens unmittelbar vor deren Aufbringen auf das Substrat zugesetzt wird.

Als Initiator/Initiatorsysteme kommen alle geläufigen und dem Fachmann bekannten Starter/Startsysteme in Frage, einschließlich radikalischer Photostarter, radikalischer Thermostarter, kationischer Photostarter, kationischer Thermostarter und beliebiger Kombinationen derselben.

Konkrete Beispiele für einsetzbare radikalische Photostarter sind Irgacure® 184 (1-Hydroxycyclohexylphenylketon), Irgacure® 500 (1-Hydroxycyclohexylphenylketon, Benzophenon) und andere von der Firma Ciba-Geigy erhältliche Photoinitiatoren vom Irgacure®-Typ; Darocur® 1173, 1116, 1398, 1174 und 1020 (erhältlich von der Firma Merck); Benzophenon, 2-Chlorthioxanthon, 2-Methylthioxanthon, 2-Isopropylthioxanthon, Benzoin, 4,4'-Dimethoxybenzoin, Benzoinethylether, Benzoinisopropylether, Benzildimethylketal, 1,1,1-Trichloracetophenon, Diethoxyacetophenon und Dibenzosuberon.

Beispiele für radikalische Thermostarter sind u.a. organische Peroxide in Form von Diacylperoxiden, Peroxydicarbonaten, Alkylperestern, Alkylperoxiden, Perketalen, Ketonperoxiden und Alkylhydroperoxiden sowie Azo-Verbindungen. Als konkrete Beispiele wären hier insbesondere Dibenzoylperoxid, tert-Butylperbenzoat und Azobisisobutyronitril zu nennen.

Ein Beispiel für einen kationischen Photostarter ist Cyracure® UVI-6974, während ein bevorzugter kationischer Thermostarter 1-Methylimidazol ist.

Diese Starter werden in den üblichen, dem Fachmann bekannten Mengen (vorzugsweise 0,01 - 5 Gew.-%, insbesondere 0,1 - 2 Gew.-%, bezogen auf den Gesamt-Feststoffgehalt der Beschichtungszusammensetzung eingesetzt. Selbstverständlich kann unter bestimmten Umständen ganz auf den Starter verzichtet werden, wie z.B. im Fall von Elektronenstrahl- oder Laserhärtung.

Die Polymerisation/Polykondensation von Stufe b) des erfindungsgemäßen Verfahrens erfolgt vorzugsweise thermisch oder durch Bestrahlung (insbesondere mit UV-Licht). Besonders bevorzugt ist eine photochemische Polymerisation/Polykondensation bzw. eine Kombination aus thermischer und photochemischer Polymerisation/Polykondensation.

Der Polymerisation/Polykondensation vorangehen kann die Abtrennung von weiteren flüchtigen, nicht-polymerisierbaren/nicht-polykondensierbaren Verbindungen aus der auf das Substrat aufgebrachten Schicht. Dieses Abtrennen von flüchtigen Bestandteilen kann aber auch bzw. zusätzlich auf der Stufe der Polymerisation/Polykondensation oder danach erfolgen.

Im folgenden soll ein typisches erfindungsgemäßes Verfahren beispielhaft skizziert werden, wobei die angegebenen Wertebereiche und Vorgehensweisen unabhängig von den konkret eingesetzten Materialien allgemeine Gültigkeit besitzen.

Nanoskalige Teilchen aus beispielsweise SiO₂, TiO₂, ZrO₂ oder anderen oxidischen oder sulfidischen Materialien (Teilchengröße 30 bis 100 nm, vorzugsweise 40 bis 70 nm) werden in einem Lösungsmittel (beispielsweise in einem niederen Alkohol wie Methanol, Ethanol, Propanol) in einer Konzentration von 1 bis 20 Gew.-%, vorzugsweise 5 bis 15 Gew.-%, dispergiert und mit einem Oberflächenmodifizierungsmittel mit polymerisierbaren/polykondensierbaren Gruppen in einer Menge von vorzugsweise 2 bis 25 Gew.-%, insbesondere 4 bis 15 Gew.-% (bezogen auf den Gesamt-Feststoffgehalt), versetzt. Die Oberflächenmodifizierung kann im Fall der Verwendung von beispielsweise Silanen durch mehrstündiges Rühren bei Raumtemperatur durchgeführt werden. Gegebenenfalls kann anschließend noch ein monomeres oder oligomeres Material mit polymerisierbaren/polykondensierbaren Gruppen, das mit dem Oberflächenmodifizierungsmittel bzw. den Oberflächengruppen kompatibel ist, in einer Menge von beispielsweise bis zu 20 Gew.-%, vorzugsweise 4 bis 15 Gew.-%, (bezogen auf den Gesamt-Feststoffgehalt) zugegeben werden.

Nach Viskositätseinstellung durch Zugabe bzw. Entfernung von Lösungsmittel werden ein oder mehrere geeignete Starter (jeweils in einer Menge von beispielsweise 0,01 bis 5 Gew.-%, bezogen auf den Gesamt-Feststoffgehalt) sowie gegebenenfalls andere übliche Additive zugegeben.

Die Beschichtungszusammensetzung wird dann auf das Substrat aufgebracht, wobei die Auftragmenge in Abhängigkeit von der gewünschten Brechzahl und dem Anwendungsbereich im allgemeinen so gewählt wird, daß Schichtdicken im Bereich von 50 bis 200 nm, vorzugsweise 100 bis 150 nm, erzielt werden.

Die anschließende Polymerisation/Polykondensation (Vernetzung) erfolgt bei relativ niedriger Temperatur, vorzugsweise im Temperaturbereich von 10 bis 50°C, insbesondere 10 bis 30°C, und besonders bevorzugt bei Raumtemperatur.

Zur Verminderung der Reaktionszeiten wird vorzugsweise eine Photopolymerisation eingesetzt; hierbei sind beliebige Lichtquellen, insbesondere UV-Licht emittierende Quellen, anwendbar (z.B. Quecksilberdampflampen, Xenonlampen, Laserlicht).

Auf die entstandene organisch vemetzte Schicht werden auf die beschriebene Weise eine oder mehrere weitere Schichten aufgebracht, bis der gewünschte Schichtverbund erhalten wird. Bei der letzten (äußersten) Schicht ist keine separate Vernetzungsstufe mehr erforderlich, sondern diese kann direkt in der abschließenden Verdichtungs- und Ausbrennstufe f) erfolgen.

In der Stufe f) wird der Schichtverbund auf Temperaturen von 400 bis 800°C, vorzugsweise 400 bis 600°C und insbesondere 400 bis 500°C, aufgeheizt und beispielsweise 1 Minute bis 1 Stunde bei dieser Temperatur gehalten. Hierbei erfolgt ein vollständiges Ausbrennen der organischen (kohlenstoffhaltigen) Bestandteile, ohne daß es zu einer Rißbildung oder anderen Defekten kommt.

Zu diesem Zweck ist es bevorzugt, das Verdichten und Ausbrennen in Stufe f) so durchzuführen, daß ein Aufheizen des Schichtverbunds von außen nach innen in Richtung auf das Substrat erfolgt. Hierdurch wird es ermöglicht, daß die im Inneren des Verbunds enthaltenen organischen Bestandteile durch die bereits erhitzten äußeren Schichten entweichen können. Die Schichten werden aus demselben Grund vorzugsweise mit einer Aufheizrate von mindestens 100°K/min erhitzt.

Die erfindungsgemäß hergestellten optischen Mehrschichtsysteme sind z.B. als Interferenz- und Antireflexsysteme für folgende Anwendungen geeignet:
Optische Filter: Antireflex- und Reflexfilter im Bereich der Brillenindustrie, Displays, Bildschirme, Halbleiterlaser, Mikrolinsen-Beschichtung, Solarzellen, "Damage-Resistant"-Laserschichten, Bandpaßfilter, Antireflexionsfilter, Absorptionsfilter und Strahlteiler.
Holographische Schichten: Lichtlenksysteme, Informationsspeicherung, Laserkoppler, Wellenleiter, Dekoration und Architektur.
Prägbare Schichten: Entspiegelungssysteme, Fokussierung in Detektorfeldern, Beleuchtung von Flachbildschirmen, Bildgebung in Fotokopierern, Faseroptiken (Lichteinkopplung).
Lithographie: Herstellung von mikrooptischen Elementen wie Wellenleitern, Gittern, Pinholes, Beugungsgittern (Punktgittern) sowie im Bereich Displaytechnik, Faserchip-Kopplung und abbildende Optik.

Die folgenden Beispiele dienen der weiteren Erläuterung der Erfindung und haben keinen beschränkenden Charakter.

### Herstellung von Beschichtungssolen

### Beispiel 1

### Synthese eines Sols zur Herstellung von Schichten mit hohem Brechwert

100g Isopropanol werden mit 18 g Methacrylsäure und 1.348 g H₂O bidest. gemischt. Nach 10 minütigem Rühren werden 13.813 g Tetraisopropylorthotitanat unter Rühren langsam zugetropft. Nach 15 minütigem Rühren werden 10 g 2-lsopropoxyethanol zugegeben. Das Gemisch wird anschließend 24 h bei 25 °C gerührt. Man erhält ein transparentes agglomeratfreies Sol aus grenzflächenmodifizierten TiO₂-Nanopartikeln.

Das Sol wird mit 0.08 g Irgacure 184 (Ciba-Geigy) und 0,02 g 1-Methylimidazol versetzt; die Mischung wird nach intensiven Rühren filtriert und ist dann als Beschichtungslack einsetzbar.

### Beispiel 2

### Synthese eines Sols zur Herstellung von Schichten mit niedrigem Brechwert

31.388 g TEOS werden mit 20.264 g Ethanol gemischt. Daneben werden 20.264 g Ethanol, 0.9 ml 4 M HCI und 22.275 g H₂O bidest. gemischt. Anschließend werden beide Gemische zusammengefügt. Das TEOS-Sol ist nach ca. 10 Minuten einsetzbar. 12.1 g Methacrylsäure werden unter Rühren zugegeben. Die Reaktionsmischung wird dann 2 Stunden bei 25 °C gerührt. Man erhält ein transparentes agglomeratfreies Sol aus grenzflächenmodifizierten SiO₂-Nanoteilchen.

Die beiden Sole werden entsprechend dem gewünschten Feststoffanteil an SiO₂ bzw. TiO₂ gemischt, wobei man die Verdünnung mit Isopropanol einstellt. Zusätzlich wird dem Gemisch 0.45 % vom Gesamtgewicht Verlaufmittel (Byk 306) zugefügt. Das Sol wird mit 0.08 g Irgacure 184 (Ciba-Geigy) und 0,02 g 1-Methyimidazol versetzt. Die Mischung wird nach intensivem Rühren filtriert und ist dann als Beschichtungslack einsetzbar.

### Beispiel 3

### Synthese eines Sols zur Herstellung von Schichten mit hohem Brechwert

28,95 g TiO₂-Sol, hergestellt nach Beispiel 1, werden mit 0.663 g Phosphorsäuretributylester versetzt und 3 Stunden gerührt. Das Sol wird anschließend mit einer Lösung aus 0.4 g destilliertem γ-Glycidylpropyltrimethoxysilan (GPTS) in 30 g 2-lsopropoxyethanol tropfenweise bei 100 °C versetzt. Nach 1h wird der Ansatz auf Raumtemperatur abgekühlt und 0,3 g hydrolysiertes GPTS werden zugegeben. Um die GPTS-Hydrolyse durchzuführen, werden 23,63 g GPTS (dest.) mit 2,70 g 0,1 N HCI-Lösung versetzt und 24 h gerührt. Anschließend werden niedermolekulare Reaktionsprodukte bei 3 mbar, 25 °C abdestilliert. Nach 15 minütigem Rühren wird der Ansatz bei 3 mbar unter Vakuum destilliert und anschließend mit 120 g 2-Isopropoxyethanol verdünnt. Man erhält ein transparentes agglomeratfreies Sol.

### Beispiel 4

### Synthese eines Sols zur Herstellung von Schichten mit niedrigem Brechwert

Eine Mischung aus 11.81 g GPTS (dest.) und 4.15 g Tetraethoxysilan (TEOS) wird mit 0.96 g 0.1 N HCI-Lösung zur Hydrolyse und Kondensation versetzt. Die Reaktionsmischung wird dann 24 Stunden bei 20 °C gerührt, worauf in einer Vakuumdestillation bei 3 mbar die niedermolekularen Bestandteile abgezogen werden. Abschließend wird das verbleibende Reaktionprodukt mit 22 g Isopropoxyethanol als Lösungsmittel verdünnt. Das Sol wird mit 0.08 g Irgacure 184 (Ciba-Geigy) und 0,02 g 1-Methyl-Imidazol versetzt. Die Mischung wird nach intensiven Rühren filtriert und ist dann als Beschichtungslack einsetzbar.

### Herstellung von Interferenzschichtpaketen

### Beispiel 5

### Herstellung einer 2-Schicht-Antireflex-Vergütung (λ/4-TiO₂ und λ/4-SiO₂) auf Glas.

Eine Glasscheibe wird gereinigt und dann mit dem Sol aus Beipiel 1 durch Tauchbeschichtung (Ziehgeschwindigkeit 2,5 mm/s) beschichtet und anschließend mittels UV-Trockner (Belltron) bei einer Bandgeschwindigkeit von 2 m/min und einer UV-Bestrahlungsleistung von 450 mW/cm² getrocknet. Im Anschluß daran wird die Scheibe mit dem Sol aus Beispiel 2 bei einer Ziehgeschwindigkeit von 3,2 mm/s tauchbeschichtet.

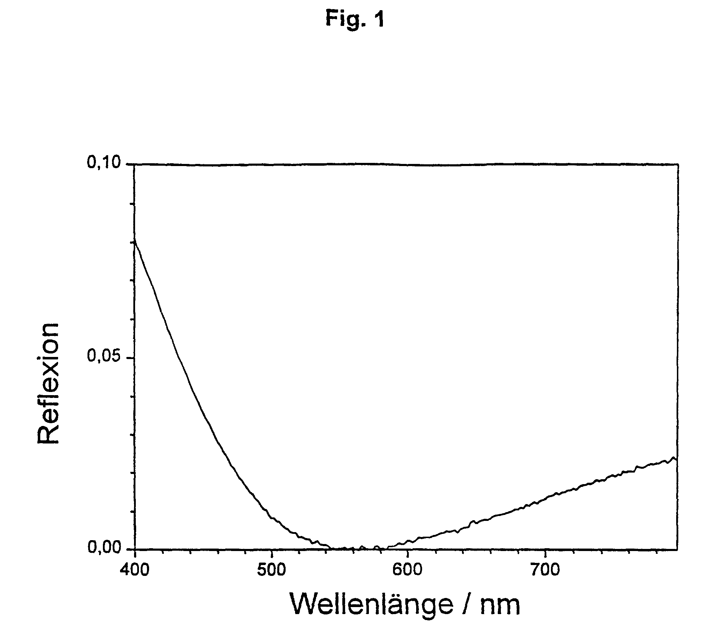

Hierauf wird die 2-fach beschichtete Scheibe direkt in einen auf 450 °C vorgeheizten Ofen gegeben und dort für 10 min belassen. Zuletzt wird die Scheibe aus dem Ofen entnommen und an Luft auf Raumtemperatur abgekühlt. Die Scheibe besitzt eine Antireflex-Vergütung mit dem in Fig. 1 gezeigten Reflexionsspektrum. Man erkennt ein V-Filter mit einem Reflexionsminimum von 0 % bei 560 nm Wellenlänge.

### Beispiel 6

### Herstellung einer 3-Schicht-Antireflex-Vergütung auf Glas

Das Beschichtungssol aus Beispiel 1wird mit dem Beschichtungssol aus Beispiel 2 im Verhältnis 1 : 0.7 Gew% (Feststoff) intensiv vermischt. Eine Glasscheibe wird mit diesem Solgemisch über das Tauchverfahren mit einer Ziehgeschwindigkeit von 2,7 mm/s beschichtet und analog Beispiel 5 mit UV-Licht gehärtet. Zur Herstellung des Beschichtungssols für die zweite Schicht wird das Sol aus Beispiel 1 mit dem Sol aus Beispiel 2 im Verhältnis 1: 0.85 Gew% (Feststoff) gemischt und die Scheibe wird damit mit einer Ziehgeschwindigkeit von 2,85 mm/s tauchbeschichtet und im Anschluß daran analog Beispiel 5 mit UV-Licht gehärtet. Im nächsten Schritt wird die Scheibe mit dem Sol aus Beispiel 2 mit einer Ziehgeschwindigkeit von 3,6 mm/s tauchbeschichtet.

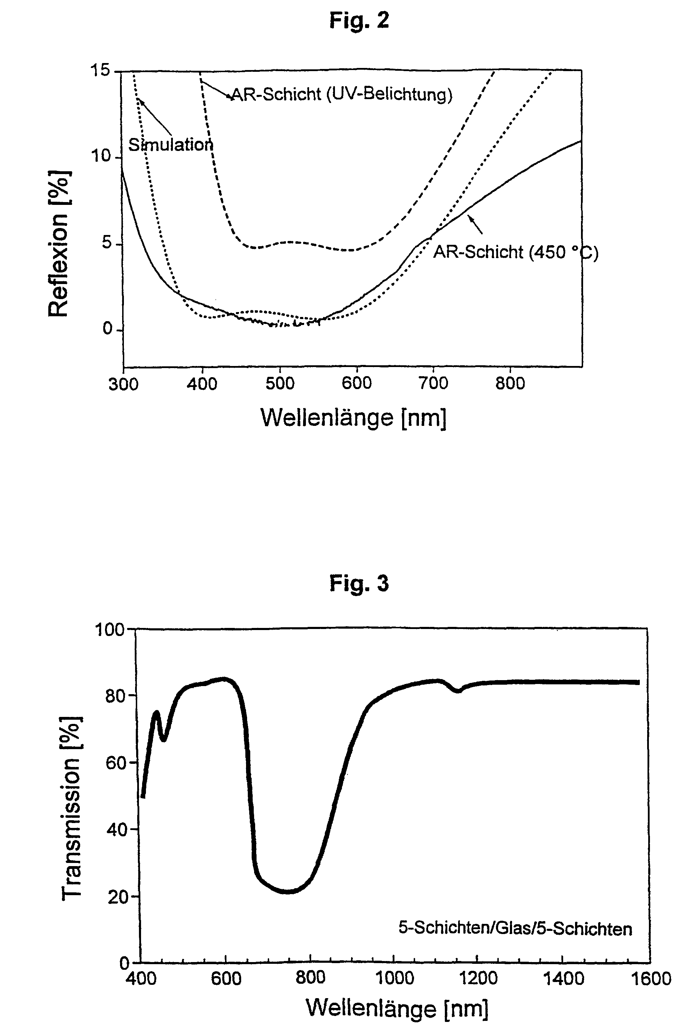

Hierauf wird die 3-fach beschichtete Scheibe direkt in einen auf 450 °C vorgeheizten Ofen gegeben und dort für 10 min belassen. Zuletzt wird die Scheibe aus dem Ofen entnommen und an Luft auf Raumtemperatur abgekühlt. Die Scheibe besitzt nun eine Antireflex-Vergütung mit dem in Fig. 2 gezeigten Reflexionsspektrum. Man erkennt, daß das Reflexionsspektrum nach UV-Belichtung die für einen Dreischichtaufbau typische W-Filter-Form besitzt. Durch den einstufigen Einbrand ergibt sich ein Reflexionsminimum im gesamten Spektrahlbereich von 380 nm - 610 nm mit einer Restreflexion ≤ 2%. Im Intervall zwischen 450 nm bis 560 nm liegt die Reflexion unterhalb 1% und bei 500 nm wird 0% Reflexion erreicht. Die gemessene Kurve stimmt sehr gut mit der über Simulation berechneten Kurve überein.

### Beispiel 7

### Herstellung einer 5-Schicht-Antireflex-Vergütung

Eine Glasscheibe wird mit üblichen Methoden gereinigt und zunächst mit dem Sol Beispiel 1 mit einer Ziehgeschwindigkeit von 1,2 mm/s tauchbeschichtet und sofort mit UV gehärtet (analog Beispiel 5). Dann wird die Scheibe mit dem Sol aus Beispiel 2 mit einer Ziehgeschwindigkeit von 2,45 mm/s tauchbeschichtet und wiederum UV gehärtet. Nun wird die Scheibe wieder mit dem Sol aus Beispiel 1 mit einer Ziehgeschwindigkeit von 1,2 mm/s tauchbeschichtet und mit UV gehärtet. Dann wird die Scheibe erneut mit dem Sol aus Beispiel 2 mit einer Ziehgeschwindigkeit von 2,45 mm/s tauchbeschichtet. Danach wird wieder eine Beschichtung mit dem Sol aus Beispiel 1 mit einer Ziehgeschwindigkeit von 1,2 mm/s aufgetragen.

Hierauf wird die 5-fach beschichtete Scheibe direkt in einen auf 450 °C vorgeheizten Ofen gegeben und dort für 10 min belassen. Zuletzt wird die Scheibe aus dem Ofen entnommen und an Luft auf Raumtemperatur abgekühlt. Die Scheibe stellt ein Interferenzfilter mit je 5 Einzelschichten auf beiden Seiten und dem in Fig. 3 gezeigten Transmissionsspektrum dar. Man erkennt ein Bandpaßfilter für den Wellenlängenbereich zwischen 620 nm und 900 nm Wellenlänge.

## Patentansprüche

1. Verfahren zur Herstellung optischer Mehrschichtsysteme, **gekennzeichnet durch** folgende Stufen:
a) Aufbringen einer nanoskalige anorganische Feststoffteilchen mit polymerisierbaren und/oder polykondensierbaren organischen Oberflächengruppen enthaltenden fließfähigen Zusammensetzung auf ein Glassubstrat;
b) Polymerisation und/oder Polykondensation der Oberflächengruppen der Feststoffteilchen unter Bildung einer organisch vernetzten Schicht;
c) Aufbringen einer weiteren Zusammensetzung gemäß a), die eine andere Brechzahl als die vorangehende Zusammensetzung ergibt, auf die organisch vernetzte Schicht;
d) Polymerisation und/oder Polykondensation der Oberflächengruppen der Feststoffteilchen unter Bildung einer weiteren organisch vernetzten Schicht;
e) gegebenenfalls ein- oder mehrmaliges Wiederholen der Schritte c) und d) unter Bildung weiterer organisch vernetzter Schichten auf den bereits vorhandenen organisch vernetzten Schichten und/oder anderen Flächen des Substrats; und
f) einstufiges thermisches Verdichten des Schichtverbunds und Ausbrennen der enthaltenen organischen Bestandteile.

2. Verfahren nach Anspruch 1, **dadurch gekennzeichnet, daß** die Bildung der organisch vernetzten Schicht(en) bei Temperaturen bis etwa 50°C, vorzugsweise bis etwa 30°C, durchgeführt wird.

3. Verfahren nach irgendeinem der Ansprüche 1 und 2, **dadurch gekennzeichnet, daß** die Bildung der organisch vernetzten Schicht(en) durch photochemische Polymerisation und/oder Polykondensation erfolgt.

4. Verfahren nach irgendeinem der Ansprüche 1 bis 3, **dadurch gekennzeichnet, daß** das einstufige Verdichten und Ausbrennen bei Temperaturen im Bereich von 400-800°C, vorzugsweise 400-600°C, erfolgt.

5. Verfahren nach irgendeinem der Ansprüche 1 bis 4, **dadurch gekennzeichnet, daß** das einstufige Verdichten und Ausbrennen so durchgeführt wird, daß ein Aufheizen des Schichtverbunds von außen nach innen in Richtung auf das Substrat erfolgt.

6. Verfahren nach Anspruch 5, **dadurch gekennzeichnet, daß** die Aufheizrate der Schicht(en) mindestens 100°K/min beträgt.

7. Verfahren nach irgendeinem der Ansprüche 1 bis 6, **dadurch gekennzeichnet, daß** die nanoskaligen Teilchen aus solchen von Metallverbindungen, insbesondere Oxiden, Sulfiden, Seleniden und Telluriden von Metallen und Mischungen derselben, ausgewählt sind.

8. Verfahren nach irgendeinem der Ansprüche 1 bis 7, **dadurch gekennzeichnet, daß** die nanoskaligen Teilchen aus solchen von SiO₂, TiO₂, ZrO₂, ZnO, Ta₂O₅, SnO₂ und Al₂O₃ und Mischungen derselben ausgewählt sind.

9. Verfahren nach irgendeinem der Ansprüche 1 bis 8, **dadurch gekennzeichnet, daß** die polymerisierbaren und/oder polykondensierbaren Oberflächengruppen ausgewählt sind aus organischen Resten, die über eine (Meth)acryl-, Vinyl-, Allyl- oder Epoxygruppe verfügen.

10. Verfahren nach irgendeinem der Ansprüche 1 bis 9, **dadurch gekennzeichnet, daß** die eingesetzten Feststoffteilchen durch Oberflächenmodifizierung von nanoskaligen Feststoffteilchen mit den entsprechenden Oberflächengruppen hergestellt wurden.

11. Verfahren nach irgendeinem der Ansprüche 1 bis 10, **dadurch gekennzeichnet, daß** die eingesetzten Feststoffteilchen unter Verwendung mindestens einer Verbindung mit entsprechenden polymerisierbaren/polykondensierbaren Gruppen hergestellt wurden.

12. Verfahren nach irgendeinem der Ansprüche 1 bis 11, **dadurch gekennzeichnet, daß** die Herstellung der anorganischen Feststoffteifchen nach dem Sol-Gel-Verfahren erfolgt.

13. Verfahren nach irgendeinem der Ansprüche 1 bis 12, **dadurch gekennzeichnet, daß** die Beschichtungszusammensetzung einen pH-Wert im Bereich von 3 bis 8 hat.

14. Optische Mehrschichtsysteme, erhältlich nach dem Verfahren nach irgendeinem der Ansprüche 1 bis 13.

15. Verwendung der optischen Mehrschichtsysteme nach Anspruch 14 als Interferenzfilter oder Antireflexsysteme.

## Claims

1. Method for producing multilayered optical systems, **characterized by** the following steps:
a) application of a flowable composition comprising nanoscale inorganic solid particles containing polymerizable and/or polycondensable organic surface groups to a glass substrate;
b) polymerization and/or polycondensation of the surface groups of the solid particles with formation of an organically crosslinked layer;
c) application to the organically crosslinked layer of a further composition in accordance with a) which produces a refractive index different to the previous composition;
d) polymerization and/or polycondensation of the surface groups of the solid particles with formation of a further organically crosslinked layer;
e) if desired, repetition of steps c) and d) one or more times with formation of further organically crosslinked layers on the organically crosslinked layers already present and/or on other surfaces of the substrate; and
f) one-step thermal densification of the multilayer system and removal of the organic constituents present by baking.

2. Method according to Claim 1, **characterized in that** the formation of the organically crosslinked layer(s) is carried out at temperatures up to about 50°C, preferably up to about 30°C.

3. Method according to any one of Claims 1 and 2, **characterized in that** the formation of the organically crosslinked layer(s) is carried out by photochemical polymerization and/or polycondensation.

4. Method according to any one of Claims 1 to 3, **characterized in that** the one-step densification and baking is carried out at temperatures in the range from 400 to 800°C, preferably from 400 to 600°C.

5. Method according to any one of Claims 1 to 4, **characterized in that** the one-step densification and baking is carried out in such a way that the composite is heated from the outside inward in the direction of the substrate.

6. Method according to Claim 5, **characterized in that** the heating rate for the layer(s) is at least 100 K/min.

7. Method according to any one of Claims 1 to 6, **characterized in that** the nanoscale particles are selected from those of metal compounds, in particular oxides, sulphides, selenides and tellurides of metals, and mixtures thereof.

8. Method according to any one of Claims 1 to 7, **characterized in that** the nanoscale particles are selected from those of SiO₂, TiO₂, ZrO₂, ZnO, Ta₂O₅, SnO₂ and Al₂O₃, and mixtures thereof.

9. Method according to any one of Claims 1 to 8, **characterized in that** the polymerizable and/or polycondensable surface groups are selected from organic radicals which contain a (meth)acrylyl, vinyl, allyl or epoxide group.

10. Method according to any one of Claims 1 to 9, **characterized in that** the solid particles employed have been produced by surface modification of nanoscale solid particles with the corresponding surface groups.

11. Method according to any one of Claims 1 to 10, **characterized in that** the solid particles employed have been produced using at least one compound containing corresponding polymerizable/polycondensable groups.

12. Method according to any one of Claims 1 to 11, **characterized in that** the inorganic solid particles are produced by the sol-gel process.

13. Method according to any one of Claims 1 to 12, **characterized in that** the coating composition has a pH in the range from 3 to 8.

14. Multilayered optical systems obtainable by the method according to any one of Claims 1 to 13.

15. Use of the multilayered optical systems according to Claim 14 as interference filters or antireflection systems.

## Revendications

1. Procédé de préparation de systèmes optiques multicouches, **caractérisé par** les étapes suivantes :
a) l'application sur un support en verre d'une composition fluide contenant des particules solides minérales d'une taille à l'échelle du nanomètre, portant des groupes superficiels organiques, polymérisables et/ou polycondensables,
b) la polymérisation et/ou la polycondensation des groupes superficiels des particules solides avec formation d'une couche organique réticulée,
c) l'application sur la couche organique réticulée d'une autre composition selon a), qui donne un autre indice de réfraction que celui donné par la composition précédente,
d) la polymérisation et/ou la polycondensation des groupes superficiels des particules solides avec formation d'une autre couche organique réticulée,
e) éventuellement la répétition une fois ou plusieurs fois des étapes c) et d) avec formation d'autres couches organiques réticulées sur les couches organiques réticulées déjà présentes et/ou sur d'autres faces du support, et
f) l'étanchéification en une seule étape par chauffage du composite stratifié et la combustion des constituants organiques présents.

2. Procédé selon la revendication 1, **caractérisé en ce que** l'on réalise la formation de la couche ou des couches organiques réticulées à des températures allant jusqu'à environ 50 °C, de préférence jusqu'à environ 30 °C.

3. Procédé selon la revendication 1 ou 2, **caractérisé en ce que** la formation de la couche ou des couches organiques réticulées s'effectue par polymérisation et/ou polycondensation photochimique.

4. Procédé selon l'une quelconque des revendications 1 à 3, **caractérisé en ce que** l'on réalise l'étanchéification en une seule étape et la combustion à des températures comprises dans le domaine allant de 400 à 800 °C, de préférence dans le domaine allant de 400 à 600 °C.

5. Procédé selon l'une quelconque des revendications 1 à 4, **caractérisé en ce que** l'on réalise l'étanchéification en une seule étape et la combustion en chauffant le composite stratifié depuis l'extérieur vers l'intérieur, en direction du support.

6. Procédé selon la revendication 5, **caractérisé en ce que** la vitesse de chauffage de la couche ou des couches atteint au moins 100 °K par minute.

7. Procédé selon l'une quelconque des revendications 1 à 6, **caractérisé en ce que** les particules d'une taille à l'échelle du nanomètre sont choisies parmi des particules de composés métalliques, en particulier des particules d'oxyde, de sulfure, de séléniure ou de tellurure métallique et leurs mélanges.

8. Procédé selon l'une quelconque des revendications 1 à 7, **caractérisé en ce que** les particules d'une taille à l'échelle du nanomètre sont choisies parmi des particules de SiO₂, TiO₂, ZrO₂, ZnO, Ta₂O₅, SnO₂ ou Al₂O₃ et leurs mélanges.

9. Procédé selon l'une quelconque des revendications 1 à 8, **caractérisé en ce que** les groupes superficiels polymérisables et/ou polycondensables sont choisis parmi des restes organiques qui possèdent un groupe acryle, méthacryle, vinyle, allyle ou époxy.

10. Procédé selon l'une quelconque des revendications 1 à 9, **caractérisé en ce que** les particules solides utilisées ont été préparées par modification en surface de particules solides d'une taille à l'échelle du nanomètre, au moyen des groupes superficiels correspondants.

11. Procédé selon l'une quelconque des revendications 1 à 10, **caractérisé en ce que** les particules solides utilisées ont été préparées en utilisant au moins un composé possédant des groupes polymérisables ou polycondensables correspondants.

12. Procédé selon l'une quelconque des revendications 1 à 11, **caractérisé en ce que** l'on réalise la préparation des particules solides minérales par le procédé sol-gel.

13. Procédé selon l'une quelconque des revendications 1 à 12, **caractérisé en ce que** la composition de revêtement a un pH compris dans le domaine allant de 3 à 8.

14. Systèmes optiques multicouches que l'on peut obtenir par le procédé selon l'une quelconque des revendications 1 à 13.

15. Utilisation des systèmes optiques multicouches selon la revendication 14 comme filtre interférentiel ou système antireflet.
